# EUROPEAN PATENT SPECIFICATION

(11) **EP 2 167 367 B1**
(45) Date of publication and mention of the grant of the patent: **28.03.2012**
(21) Application number: 09787906.8
(22) Date of filing: 30.07.2009
(51) Int. Cl.: B62J 35/00, B62J 37/00, B62K 11/10

(54) **SCOOTER TYPE VEHICLE**
ROLLERARTIGES FAHRZEUG
VÉHICULE DE TYPE SCOOTER

(30) Priority: 01.08.2008 JP 2008200110; 19.02.2009 JP 2009036395
(43) Date of publication of application: 31.03.2010
(73) Proprietor: Yamaha Hatsudoki Kabushiki Kaisha, Iwata-shi, Shizuoka 438-8501 (JP)
(72) Inventor: HUANG, Chingyu, Iwata-shi Shizuoka 438-8501 (JP); OOHIRA, Masaru, Iwata-shi Shizuoka 438-8501 (JP); WANG, Hsing-yang, Iwata-shi Shizuoka 438-8501 (JP)
(74) Representative: Zimmermann, Tankred Klaus
(86) International application number: PCT/JP2009/003623
(87) International publication number: WO 2010/013479

(56) References cited:
- EP-A- 1 520 774
- JP-A- 3 246 183
- JP-A- 7 069 263
- JP-A- 2003 112 679

## Description

### Technical Field

The present invention relates to a scooter type vehicle.

### Background Art

A conventional scooter type vehicle is disclosed, for example, in JP 2003-246287 A. The scooter type vehicle is provided with a low-floor footboard between a handle for steering a front wheel and a seat where the rider sits.

The vehicle body frame of this scooter type vehicle includes a head pipe, a front frame and left and right side frames. The front frame extends downward from the head pipe and curves backward. The left and right side frames extend to the rear of the vehicle from a lower part of the front frame. The footboard is disposed on the rear end of the front frame and the left and right side frames.

In this scooter type vehicle, the head pipe and front frame are covered with a cover member, and a fuel filler opening is disposed in the cover member. The fuel filler opening and a connection tube provided to a fuel tank are connected through a fuel pipe. The fuel tank is disposed below the left and right side frames and below the footboard.

In order to dispose the fuel filler opening in the cover member and to connect the fuel filler opening and the connection tube of the fuel tank through a fuel pipe as previously described, the fuel tank is required to be extended further forward than the left and right side frames. Additionally, to ensure the capacity of the fuel tank sufficiently, the fuel tank is required to be forwardly extended from the position below the left and right side frames. As described above, the following positional relation is established among the fuel tank, the left and right side frames and the front frame. The front part of the fuel tank, the front ends of the left and right side frames and the front frame are disposed from front to rear in this order. However, the front wheel is disposed forward of the fuel tank. Therefore, there is a limitation in disposing the front part of the fuel tank to the forward. As a result, the front frame of the conventional scooter type vehicle is disposed in a relatively rearward position.

Also, the footboard is formed behind a lower part of the front frame. Therefore, when the front frame is disposed in a rearward position, this causes a drawback that a space of the footboard is reduced in the longitudinal direction.
JP 2003-246287 A describes a fuel system structure for a scooter-type vehicle which has a main tank that is arranged on the body of the scooter-type vehicle having a side stand. The main tank is arranged under a foot board and is inclined so that a side on which the side stand is arranged and an upper face that opposes the side are made lower when a vehicle body is in a stand-up position.
JP 2003-112679 A describes a vehicle body for a scooter type motorcycle having a bottom part of a storing box between the back stays. A rear end part of the storing box is placed from the above between rear end parts of the back stays. The rear end parts of the back stays are connected by a U-shaped cross member opened upward viewed from a rear side.
JP 03-246183 A describes a scooter type motorcycle having an upper fuel tank arranged on the front frame extending downward from a steering shaft cylinder and a lower fuel tank arranged in a foot rest and connecting both of the fuels by a flexible pipe.
JP 07-069263 A describes a motorcycle having a fuel tank arranged inside of a step floor.

### Summary of the Invention

It is an object of the present invention to enlarge a space of a footboard in a longitudinal direction in a scooter type vehicle without enlarging the entire vehicle. This object is achieved by a scooter type vehicle of claim 1.

To solve the aforementioned technical problem, the present invention improves a vehicle body frame structure, and further improves disposition of the fuel tank and the fuel supply part based on the improved vehicle body frame structure.

### <Vehicle body frame structure>

The front ends of the conventional left and right side frames are connected to the front frame in the same vertical position. A part of the right side frame extends from the connection portion in an obliquely right-rearward direction, whereas a part of the left side frame similarly extends from the connection portion in an obliquely left-rearward direction. In this case, the inclination angle of the right side frame and that of the left side frame are the same. Moreover, the remaining parts of the left and right side frames extend rearward along a center line perpendicular to a transverse direction of the vehicle (hereinafter simply referred to as "vehicle body center line").

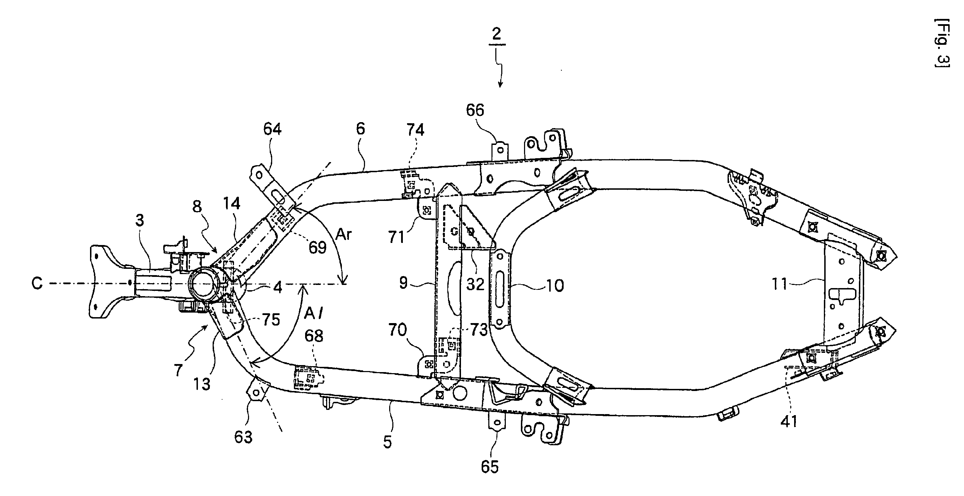

On the other hand, left and right side frames of the present invention are connected to a front frame, while the inclination angle of one of the front parts of the left and right side frames with respect to the transverse directional center of the vehicle is greater than that of the other of the front parts of the left and right side frames in a plan view of the vehicle. In other words, one of the front parts of the left and right side frames extends further transversely-outward toward the rear end thereof than the other of the front parts of the left and right side frames. Here, the center line perpendicular to the transverse direction of the vehicle (i.e., the vehicle body center line) is a line C illustrated in FIG. 3. The vehicle body center line is in parallel to a line connecting the transverse directional center of the front wheel and that of the rear wheel. The vehicle body center line passes through the center of the front frame. Note the vehicle body center line is normally the same as the line connecting the transverse center of the front wheel and that of the rear wheel. Additionally, as illustrated in FIG. 3, the inclination angle of the left side frame is an angle Al, whereas the inclination angle of the right side frame is an angle Ar. The angle Al/Ar of the left/right side frame is formed by the center line of the left/right frame and the vehicle body center line C in the front part of the left/right side frame. In other words, the inclination angle of the left/right side frame is formed by the center line of the left/right side frame and the vehicle body center line C behind the connection portion between the front frame and the left/right side frame in the front part of the left/right side frame.

As is evident from FIG. 3, with the aforementioned connection of the left and right side frames to the front frame, a larger space is formed between the front parts of the left and right side frames in a plan view of the vehicle than the conventional frame structure.

However, strength of the side frame having a larger inclination angle (i.e., the left side frame in the example of FIG. 3) will be reduced when the external force, which is applied to the front wheel and acts from front to rear, acts on the upper part of the front frame.

The side frame having a larger inclination angle is connected to the front frame in a higher position than the other side frame. In other words, heights of the left and right side frames are different from each other. Accordingly, it is possible to ensure strength for the external force acting on the upper part of the front frame. Moreover, when the external force acts on the upper part of the front frame, less force acts on the side frame having a larger inclination angle (i.e., the side frame connected to the front frame in a higher position) than on the other side frame.

According to the present invention, it is thus possible to form a large space between the both side frames in a plan view, while reduction in strength of the left and right side frames is further inhibited than the conventional structure.

### <Dispositions of Fuel Tank and Fuel Supply Part>

According to the present invention, with the aforementioned vehicle body frame structure, a larger space is formed between the both side frames than the conventional structure. Therefore, the fuel tank, having a sufficient capacity, is allowed to be disposed with use of the space.

Additionally, the fuel tank at least partially overlaps with the right side frame or the left side frame in a side view of the vehicle. It is thereby possible to ensure the capacity of the fuel tank sufficiently in the vertical direction. As a result, the fuel tank, having a sufficient capacity, is allowed to be disposed.

Moreover, the fuel supply part is disposed rearward of the front frame in a side view of the vehicle, while it is connected to the fuel tank between the both side frames in a plan view of the vehicle. Therefore, it is possible to dispose the lower part of the front frame in a further forward position than the conventional structure. Additionally, it is possible to dispose the front end of the footboard in a further forward position than the conventional structure. As a result, it is possible to enlarge a space of the footboard in the longitudinal direction than the conventional structure.

### <Configuration of the present invention>

In view of the above, a scooter type vehicle according to the present invention is provided with a vehicle body frame having a head pipe, a front frame, a left side frame and a right side frame. The front frame extends downward from the head pipe. The left side frame extends in a left-rearward direction of the vehicle from a lower part of the front frame. The right side frame extends in a right-rearward direction of the vehicle from the lower part of the front frame. A front wheel is supported by the head pipe, and is disposed forward of the front frame. Moreover, the scooter type vehicle of the present invention is provided with a footboard, a fuel tank, a vehicle body cover and a fuel supply part. The footboard is disposed above the left side frame and the right side frame. The fuel tank is disposed below the footboard. The fuel tank at least partially overlaps with the right side frame or the left side frame in a side view of the vehicle. The vehicle body cover includes a front cover part (47 or 48) for covering the head pipe and the front frame. The front cover part (47 or 48) is provided with a fuel filler opening. The fuel filler opening is positioned higher than the footboard. The fuel supply part connects the fuel filler opening and the fuel tank.

Moreover, one of front parts of the left and right side frames is largely inclined with respect to the center line perpendicular to the transverse direction of the vehicle than the other of the front parts of the left and right side frames in a plan view. Additionally, one of the front parts of the left and right side frames is connected to the front frame in a higher position than the other of the front parts of the left and side frames. The fuel supply part is connected to the fuel tank in a further rearward position than the front frame in a side view of the vehicle body. The connection position of the fuel supply part to the fuel tank is below one of the left and right side frames positioned higher than the other of the left and right side frames. Moreover, the connection position of the fuel supply part to the fuel tank is between the left side frame and the right side frame in a plan view of the vehicle body.

### Advantageous Effects of Invention

According to the present invention, it is possible to dispose both the fuel tank and the fuel supply part between the left and right side frames and rearward of the front frame without reducing strength of the vehicle body frame. In other words, it is possible to largely form a space of the footboard in the longitudinal direction while strength of the vehicle body is ensured.

### Brief Description of Drawings

[fig.1]FIG. 1 is a left side view of the scooter type vehicle according to a first embodiment of the present invention.
[fig.2]FIG. 2 is a left side view of the vehicle body frame assembly of the scooter type vehicle.
[fig.3]FIG. 3 is a plan view of the vehicle body frame assembly of the scooter type vehicle.
[fig.4]FIG. 4 is a front view of the vehicle body frame assembly seen along an arrow IV in FIG. 2.
[fig.5]FIG. 5 is a left side view illustrating a fuel tank and a tank guard, attached to the vehicle body frame of the scooter type vehicle.
[fig.6]FIG. 6 is a plan view of the fuel tank and the tank guard seen along an arrow VI in FIG. 5.
[fig.7]FIG. 7 is a left side view of the fuel tank assembly of the scooter type vehicle.
[fig.8]FIG. 8 is a plan view of the fuel tank assembly of the scooter type vehicle.
[fig.9]FIG. 9 is a detailed left side view of the vicinity of the vehicle body frame and the fuel tank of the scooter type vehicle.
[fig.10]FIG. 10 is a plan view of the vicinity of the vehicle body frame and the fuel tank, seen along an arrow X in FIG. 9.
[fig. 11]FIG. 11 is a left side view of a vehicle body frame and a fuel tank of a scooter type vehicle according to a second embodiment of the present invention.
[fig.12]FIG. 12 is a front view of the vehicle body frame seen along an arrow XII in FIG. 11.
[fig.13]FIG. 13 is a perspective view of the vehicle body frame of the scooter type vehicle according to the second embodiment, seen from left front.
[fig.14]FIG. 14 is a perspective view of the vehicle body frame of the scooter type vehicle according to the second embodiment, seen from right rear.

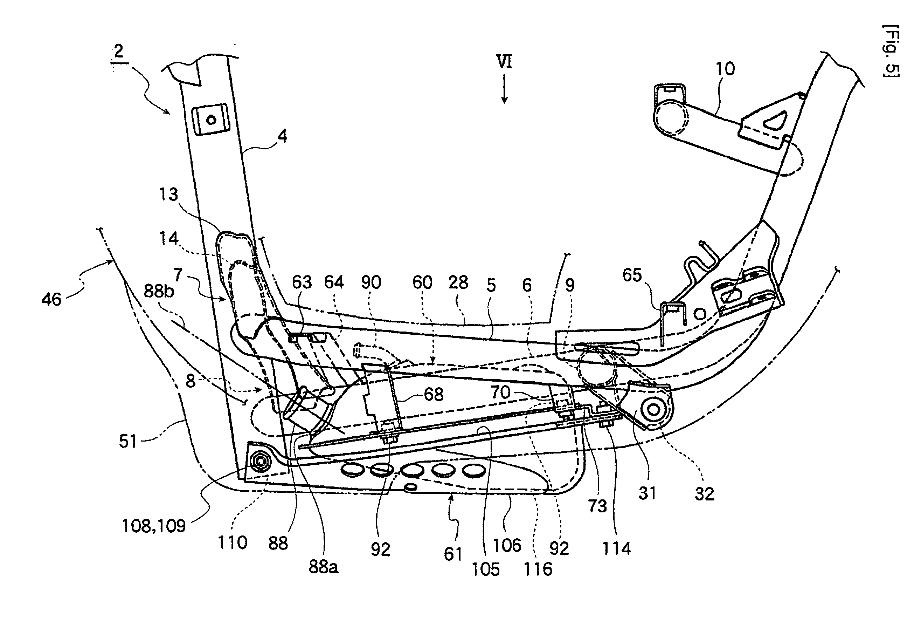

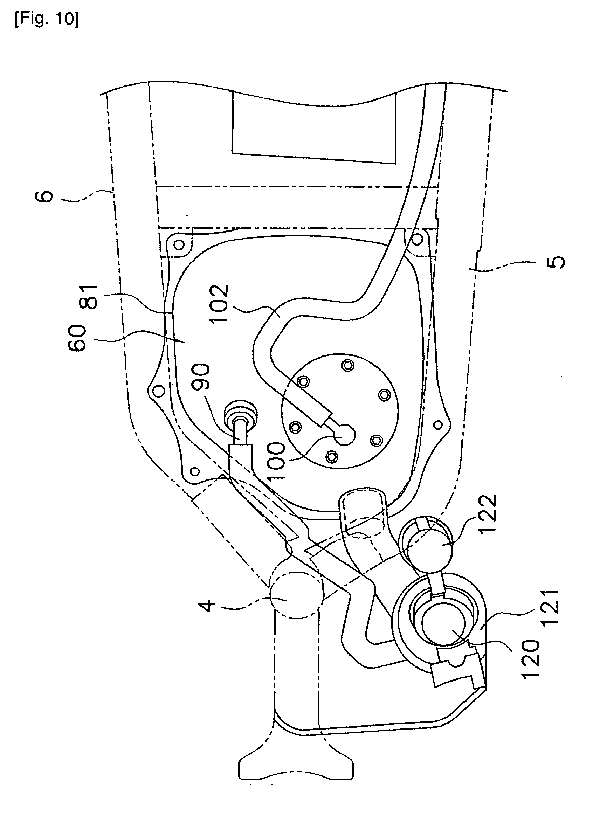

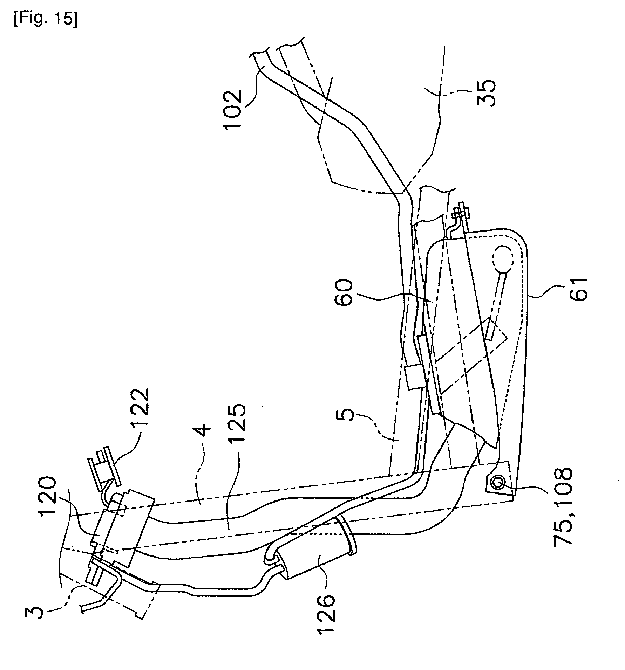

[fig.5]FIG. 15 is a diagram of another embodiment, corresponding to FIG. 10.

### Description of Embodiments

In the present specification, directional words, such as "front," "rear," "right" and "left," indicate directions seen from a rider riding on a vehicle.

### First Embodiment

### <Overall Structure>

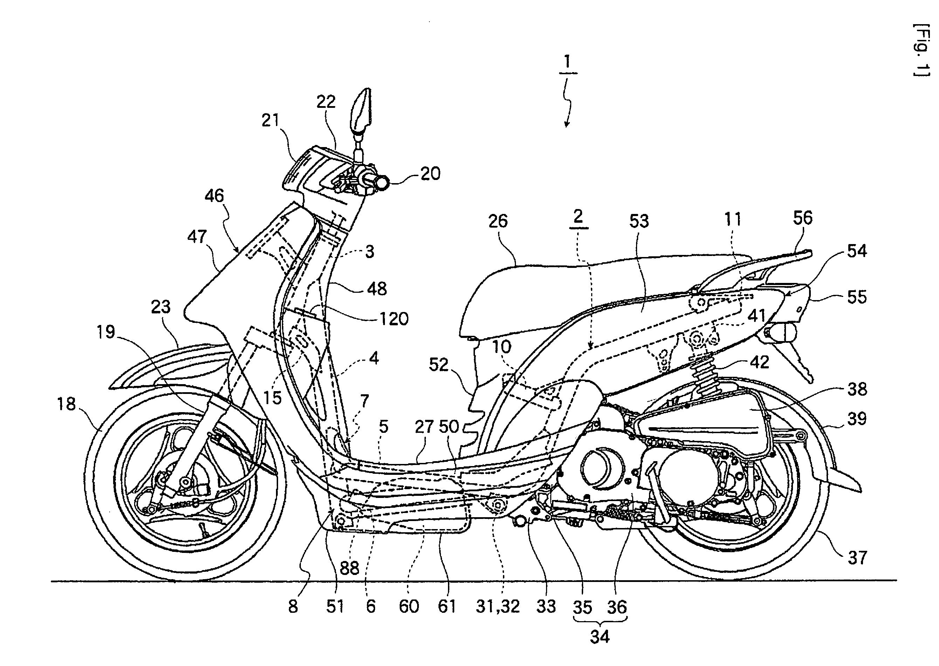

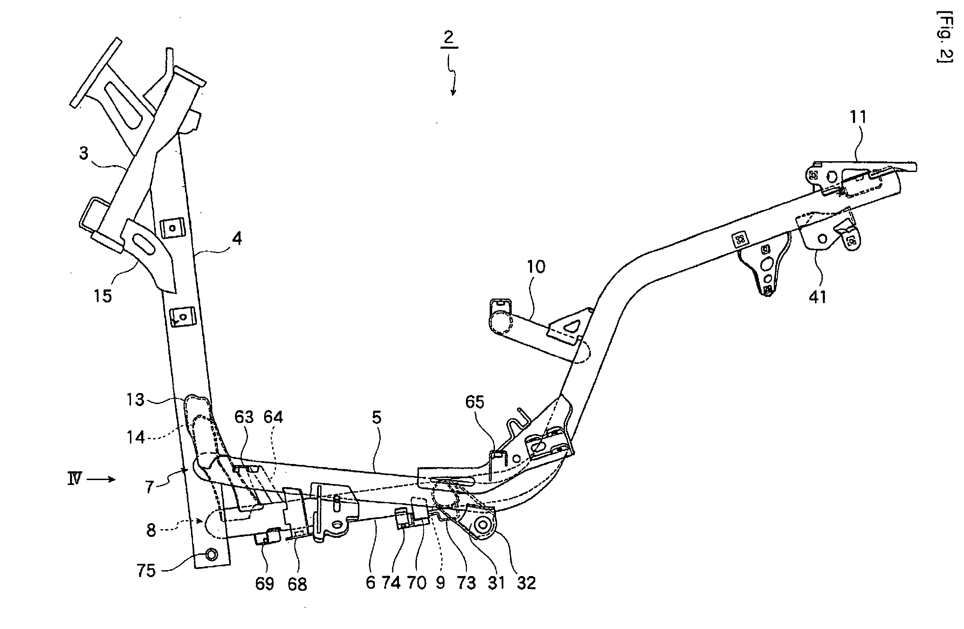

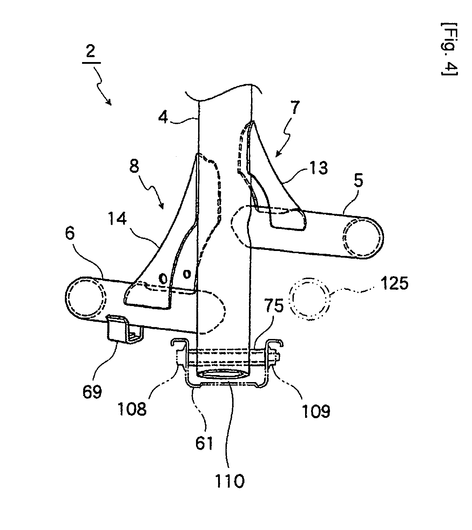

FIG. 1 is a left side view of a scooter type vehicle according to a first embodiment of the present invention. FIG. 2 is a left side view of the vehicle body frame assembly of the scooter type vehicle. FIG. 3 is a plan view of the same vehicle body frame. FIG. 4 is a front view of the vehicle body frame seen along an arrow IV in FIG. 2.

The vehicle body frame 2 of the scooter type vehicle 1 has a head pipe 3, a front frame 4, and left and right side frames 5, 6. The head pipe 3 is positioned at the front part of the vehicle body frame 2. The head pipe 3 is formed into a rectilinear shape extending in the vertical direction, and is inclined in a downwardly forward direction. The front frame 4 is shaped into a rectilinear shape extending in the vertical direction. The front frame 4 is inclined in a downwardly rearward direction. The front frame 4 is inclined in the opposite direction to the head pipe 3 in a side view of the vehicle. The top end of the front frame 4 is joined to the head pipe 3. The front end of the left side frame 5 is joined to a lower part of the front frame 4, and extends from the joining part (i.e., a left joining part 7) in a left-rearward direction. The left joining part 7 includes a reinforcing member 13 and the connection part between the left side frame 5 and the front frame 4. Also, the front end of the right side frame 6 is joined to an approximately bottom end of the front frame 4, and extends from the joining part (i.e., a right joining part 8) in a right-rearward direction of the vehicle. The right joining part 8 includes a reinforcing member 14 and the connection part between the right side frame 6 and the front frame 4. Coupling frames 9, 10, 11 couple the left and right side frames 5, 6 together. The coupling frames 9, 10, 11 extend in the transverse direction of the vehicle.

As is evident from FIG. 4, the left and right side frames 5, 6 are joined at substantially right angles respectively to the left and right side surfaces of the approximately bottom end of the front frame 4 in a front view of the vehicle body. The left side frame 5 is joined to the front frame 4 in a higher position than the right side frame 6. Additionally, the front part of the left side frame 5 extends in an upwardly rearward direction in a side view of the vehicle body (see FIG. 2). Therefore, in a side view of the vehicle body (see FIG. 2), the front half portion of the left side frame 5 is inclined in a downwardly rearward direction, whereas the front half portion of the right side frame 6 is inclined in a upwardly rearward direction. The vertical relation between the joining parts 7, 8 is not limited to the one described in this embodiment. Conversely, the position of the left joining part 7 of the left side frame 5 may be positioned lower than the right joining part 8 of the right side frame 6.

As is evident from FIG. 3, an inclination angle A1 with respect to the vehicle body center line C in the front part of the left side frame 5 is greater than an inclination angle Ar with respect to the vehicle body center line C in the front part of the right side frame 6 in a plan view. In other words, the front part of the left side frame 5 further outwardly extends from the front end to the rear end thereof than the front end of the right side frame 6.

In addition, a reinforcing member 15 is provided to the joining part between the head pipe 3 and the front frame 4.

The reinforcing members 13, 14 are joined to the front frame 4 and the top surfaces of the left and right side frames 5, 6, as illustrated in FIGS. 2 through 4.

As described above, the left side frame 5 inclines downward as it extends away from the front frame 4, whereas the right side frame 6 inclines upward as it extends away from the front frame 4. It is thereby possible to reduce a height difference between outermost portions of the left and right side frames 5, 6 in the transverse direction of the vehicle. Additionally, height of the right side frame 6 is lower than that of the left side frame 5. It is thereby possible to prevent the right bank angle of the vehicle body from being reduced.

As illustrated in FIG. 1, a front fork 19 for supporting a front wheel 18 is pivotally supported by the head pipe 3 and is accordingly allowed to be steered. A handle 20 for steering the front wheel 18 is disposed at the top end of the front fork 19. A front fender 23 for covering the upper part of the front wheel 18 is fixed to the front fork 19. Additionally, a head light 21 and a meter panel 22 are disposed in the vicinity of the handle 20.

The rear portions of the left and right side frames 5, 6 are curved and extended in an upwardly rearward direction of the vehicle body. A seat 26 on which the rider straddles is supported by the rear portions of the side frames 5, 6. The footboard 27 is disposed between the seat 26 and the head pipe 3. The footboard 27 is also positioned lower than the seat 26. The footboard 27 is a component on which the rider puts his/her feet. The footboard 27 is disposed above the left and right side frames 5, 6 in a side view.

Left and right engine brackets 31, 32 are fixed to the coupling frame 9 positioned in the center bottom of the vehicle body frame 2. A power unit 34 is supported by the engine brackets 31, 32 via a link member 33 in a vertically swingable manner. The power unit 34 is a common model for scooter type vehicles that a belt transmission device 36 is integrally provided to the rear of an engine 35. A rear wheel 37 is rotatably supported behind the belt transmission device 36, and an air cleaner 38 connected to the engine 35 is positioned above the belt transmission device 36. Furthermore, a rear fender 39 is provided above the rear wheel 37.

Furthermore, as is evident from FIG. 2 and other figures, a bracket 41 is fixed to the rear part of the left side frame 5, and a rear suspension 42 is coupled between the rear part of the belt transmission device 36 and the bracket 41.

The vehicle body frame 2 and the power unit 34 are covered with a vehicle body cover 46 made of a synthetic resin. The body cover 46 is composed of a plurality of cover members including, e.g., a front cover 47, a leg shield cover 48, a side cover 50, an under cover 51, a rear cover 52, a rear side cover 53 and the footboard 27.

The head pipe 3 and the front frame 4 are covered with the forwardly-positioned front cover 47 and the rearwardly-positioned leg shield cover 48. The front cover 47 or the leg shield cover 48 composes a front cover part.

Moreover, the rear cover 52 and the rear side cover 53 compose a rear cover part. The rear cover part covers a space beneath the seat 26. The interior of the space has an article storage compartment (not shown). A taillight 55 and a grab bar 56 are disposed in the rear part of the vehicle.

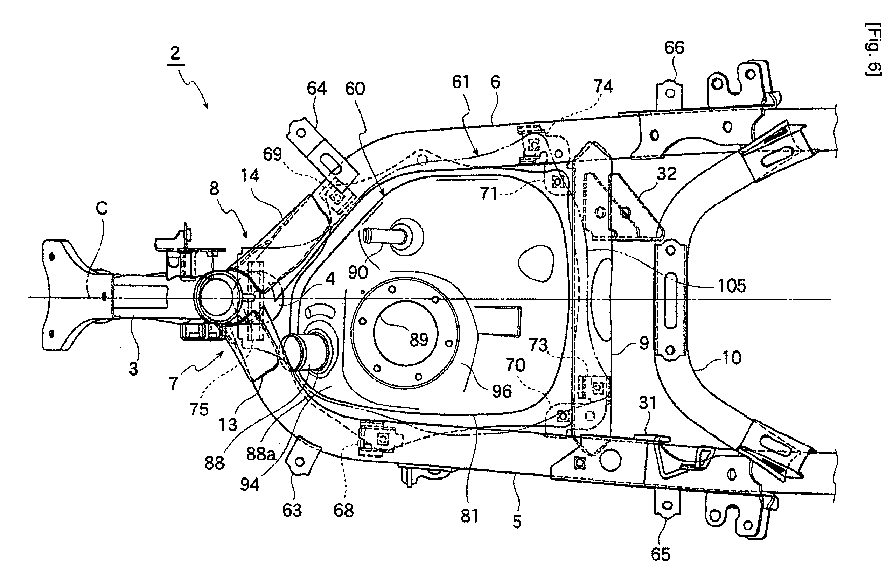

A fuel tank 60 is positioned underneath the footboard 27, and a tank guard 61 is attached underneath the fuel tank 60, as illustrated in FIGS. 5 and 6.

The left and right side frames 5, 6 and the coupling frame 9 are provided with: footboard fastening brackets 63, 64, 65, 66 to which the footboard 27 is fastened; tank fastening brackets 68, 69, 70, 71 to which the fuel tank 60 is fastened; and guard fastening brackets 73, 74 to which the rear part of the tank guard 61 is fastened. A cylindrical guard fastening boss 75 penetrates through the approximately bottom end of the front frame 4 in the transverse direction of the vehicle.

### <Fuel Tank>

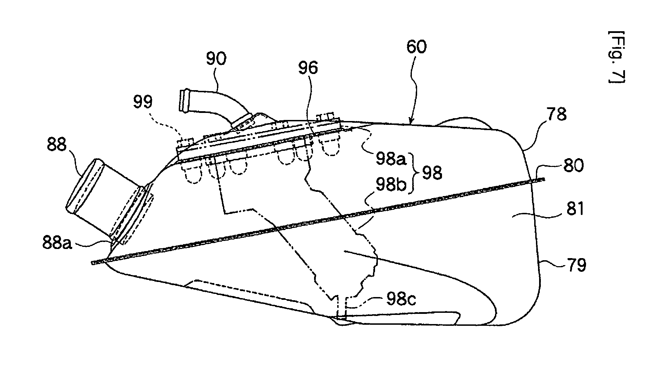

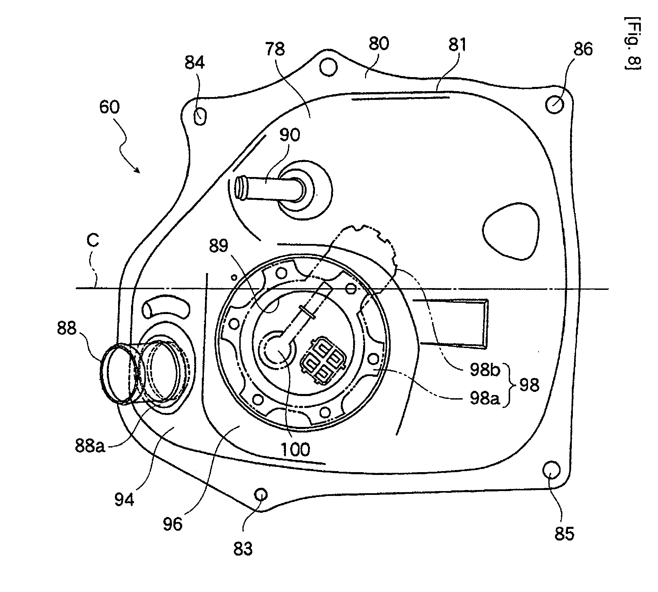

FIG. 7 is a left side view of the fuel tank 60 assembly, and FIG. 8 is a plan view of the fuel tank 60. The fuel tank 60 is formed by joining a top half 78 and a bottom half 79 along a joining flange 80. Excluding the joining flange 80, the other part of the fuel tank 60 constitutes a box-shaped main body part 81. Frame attachment holes 83, 84, 85, 86 are formed in the joining flange 80. A connection tube 88, a fuel pump attachment opening 89 and a breather tube 90 are disposed in the top half 78.

The connection tube 88 is attached to a connection part 88a provided in the top half 78. For example, the connection part 88a is a flanged hole formed in the front part of the top surface of the top half 78, and the connection tube 88 is inserted through and welded to the hole. Alternatively, the connection tube 88 may be formed integrally with the top half 78 by press forming or the like, for example. In this case, the connection tube 88 is a cylindrical part protruding from the top surface of the fuel tank 60. Additionally, the root portion of the connection tube 88, connected to the fuel tank 60, constitutes the connection part 88a.

The frame attachment holes 83, 84 of the joining flange 80 on the fuel tank 60 are disposed below the tank fastening brackets 68, 69 (see FIGS. 2, 3, 5, 6, etc.). The tank fastening brackets 68, 69 are fastened to the joining flange 80 with fixing bolts 92 (see FIG. 5) inserted into the frame attachment holes 83, 84 from below. In addition, the frame attachment holes 85, 86 of the joining flange 80 are disposed on the top surfaces of the tank fastening brackets 70, 71 (see FIG. 3, etc.). The tank fastening brackets 70, 71 are fastened to the joining flange 80 with fixing bolts 92 inserted into the frame attachment holes 83, 84 from above. The fuel tank 60 can thereby be fixed to the vehicle body frame 2.

As illustrated in FIGS. 6 and 8, the fuel tank 60 has a protruding part 94, protruding forward of the vehicle body, on the left-half part of the fuel tank 60 with respect to the vehicle body center line C in a plan view of the vehicle body. The protruding part 94 indicates a part protruding from a hypothetical left-half part of the fuel tank 60, symmetrically formed with the actual right-half part of the fuel tank 60. The protruding part 94 forms a part of the main body part 81 of the fuel tank 60. The fuel tank 60 is formed in a bilaterally asymmetrical shape in a plan view. The connection part 88a is formed in the top surface of the protruding part 94, and the connection tube 88 is connected thereto. Consequently, the connection tube 88 is disposed at the top of the left-half part of the fuel tank 60 in the transverse direction of the vehicle. As is evident from FIG. 6, the left and right side frames 5, 6 of the vehicle body frame 2 are formed in accordance with the shape of the main body part 81 of the fuel tank 60 in a plan view. Additionally, the left and right side frame 5, 6 of the vehicle body frame 2 are formed in bilaterally asymmetrical shape with respect to the vehicle body center line C in a plan view.

The main body part 81 of the fuel tank 60 overlaps with at least either the left side frame 5 or the right side frame 6 in a side view of the vehicle body. On the other hand, the main body part 81 of the fuel tank 60 does not overlap with the left side frame 5 and the right side frame 6 in a plan view of the vehicle body (see FIG. 6). In the present embodiment, the main body part 81 overlaps with both of the left and right side frames 5, 6 in a side view of the vehicle body.

The connection part 88a, to which the connection tube 88 is connected, is positioned behind the front frame 4 in a side view of the vehicle body. Additionally, the connection part 88a is disposed below at least one of the left side frame 5 and right side frame 6 and between the left side frame 5 and right side frame 6 in a plan view of the vehicle body (see FIG. 6). In the present embodiment, the connection part 88a is disposed below the high-positioned left side frame 5.

Furthermore, the attachment angle of the connection tube 88 is inclined in an upwardly forward direction as illustrated in FIG. 5. The connection tube 88 is angled so that a center axis extension line 88b thereof passes beneath the left side frame 5.

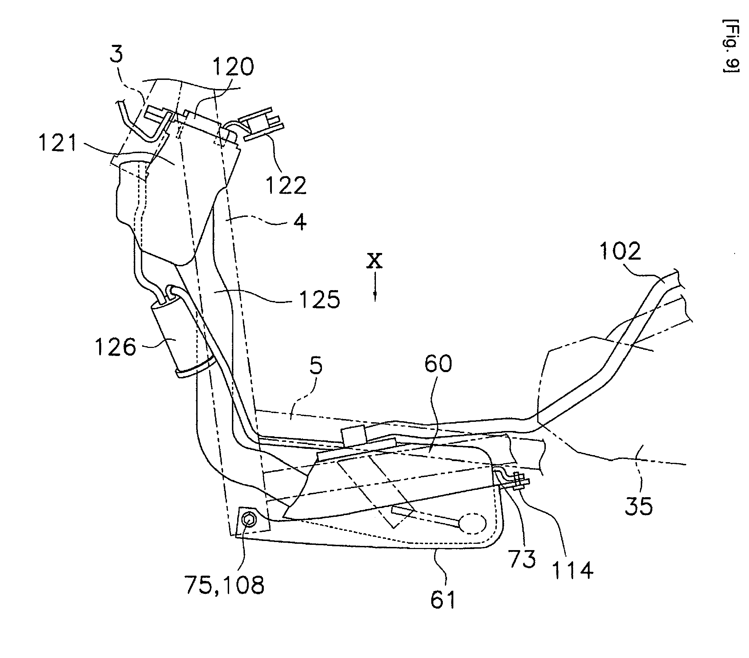

As illustrated in FIGS. 7 and 8, an inclined surface 96, inclined in a downwardly forward direction, is formed on the top surface of the fuel tank 60. The fuel pump attachment opening 89 is provided in the inclined surface 96. A fuel pump 98 is attached by a plurality of fixing bolts 99 to the fuel pump attachment opening 89. A fuel discharge union 100 and a fuel injection device (not shown) are connected through a fuel hose 102 (see FIGS. 9 and 10). The fuel discharge union 100 is provided at the head of the fuel pump 98, and the fuel injection device is disposed at the top of the engine 35. As is evident in FIG. 7, height of the inclined surface 96 is lower than other portions devoid of an inclined surface. Specifically, the inclined surface 96 constitutes a flat-surface portion obtained by cutting off the portion bulging to the upward of the main body part 81.

The fuel pump 98 has an attachment flange 98a in the top end thereof, and has a pump body 98b in the bottom part of the attachment flange 98a. The attachment flange 98a is mounted on the inclined surface 96, and the pump body 98b is inclined at an even greater angle than the angle of the inclined surface 96. Therefore, the pump body 98b is largely inclined forward inside the fuel tank 60. In a plan view of the vehicle body (see FIG. 8), the pump body 98b is oriented and extended in an obliq1uely right-rearward direction from the attachment flange 98a. A fuel intake tube 98c, provided in the lowest part of the pump body 98b, faces the vicinity of the deepest center part of the fuel tank 60 in the longitudinal and transverse directions.

A tank guard 61 is provided under the fuel tank 60. The tank guard 61 is a cover member made by press-forming a metal plate. As illustrated in FIGS. 5 and 6, the tank guard 61 has a flange part 105 and a guard part 106. The flange part 105 forms the periphery of the tank guard 61. The guard part 106 is provided to the inner peripheral side of the flange part 105. The guard part 106 is curved and bulged downward. The guard part 106 is formed slightly larger than the shape of the bottom half of the fuel tank 60, and is shaped substantially the same as the lower half of the fuel tank 60. The external edge of the flange part 105 is folded back downward for greater bending rigidity.

The front part of the tank guard 61 is fastened by a through bolt 108 and a nut 109 (see FIG. 4) to the guard fastening boss 75 formed at the bottom end of the front frame 4. On the other hand, the rear part of the tank guard 61 is fastened by fixing bolts 114 to the guard fastening brackets 73, 74 (see FIGS. 5 and 6). The front end of the tank guard 61 and the bottom end of the front frame 4 are disposed at a distance from each other. Accordingly, a clearance 110 (see FIGS. 4 and 5) is formed. In addition, the fuel tank 60 and the middle and rear parts of the tank guard 61 are disposed at a distance from each other. Accordingly, a clearance 116 (see FIG. 5) is formed.

For example, fuel is supplied to the fuel tank 60 from a fuel filler opening 120 (see FIG. 1), provided in the leg shield cover 48 for covering the head pipe 3 and front frame 4. The fuel filler opening 120 is provided at the top of a sub-tank 121, and has a fuel supply lid 122 configured to be opened and closed, as illustrated in FIGS. 9 and 10. The sub-tank 121 is accommodated in a space between the leg shield cover 48 and the front cover 47. The sub-tank 121 is thus concealed from the exterior. Accordingly, only the fuel filler opening 120 (fuel supply lid 122) is exposed to the exterior.

The sub-tank 121 and the connection tube 88 of the fuel tank 60 are connected through a fuel pipe 125 made of flexible material (e.g., rubber). The fuel pipe 125 passes below the left side frame 5, and is connected to the connection tube 88, as illustrated in FIG. 4. Therefore, height of the entire vehicle is not increased due to the disposition of the fuel pipe 125.

A canister 126 for recovering volatile fuel in the fuel tank 60, and other auxiliary parts are placed underneath the sub-tank 121. Furthermore, a breather hose (not shown) is provided between the sub-tank 121 and the breather tube 90 of the fuel tank 60. The fuel pipe 125, the canister 126, the breather hose and other members are placed to the left of the front frame 4. These members are concealed by the front cover 47 and leg shield cover 48, and are not exposed to the exterior. The sub-tank 121 and the fuel pipe 125 compose the fuel supply part.

### Features of First Embodiment

The scooter type vehicle 1 is configured as described above. In this scooter type vehicle 1, as described above, the connection part 88a for connecting the connection tube 88 to the front top part of the fuel tank 60 is disposed behind the front frame 4 in a side view of the vehicle body, and is positioned lower than at least one of the left side frame 5 and right side frame 6. Moreover, the connection part 88a is disposed between the left side frame 5 and right side frame 6 in a plan view of the vehicle body. Therefore, the fuel supply part, e.g., the fuel tank 60the connection part 88a, is allowed to be disposed rearward of the font frame 4. The front frame 4 is thereby allowed to be disposed in a further forward position than that in the conventional vehicle. As a result, the front end of the footboard 27 is allowed to be extended further forward, and a space of the footboard 27 in the longitudinal direction is thereby enlarged.

Moreover, the inclination angle of the left side frame 5 with respect to the vehicle body center line C is set to be large, and a large space is formed between the left and right side frames 5, 6. The fuel tank 60 is thereby allowed to be disposed in the space and the fuel tank 60 is allowed to have a relatively sufficient capacity. Also, the fuel tank 60 and the left and right side frames 5, 6 overlap in a side view of the vehicle body. Height of the footboard 27 is accordingly inhibited to a predetermined level.

When the external force acts on the upper part of the front frame 4, strength of the left side frame 5 may be reduced because it is inclined at a large angle. In response to this, the left side frame 5 is connected to the front frame 4 in a higher position than the right side frame 6. When the external force acts on the upper part of the front frame 4, the force acting on the left side frame 5 will be thereby lower than that acting on the right side frame 6. As a result, strength of the both side frames 5, 6 will be approximately the same.

Moreover, the connection tube 88 (the connection part 88a) is disposed on the left side with respect to the vehicle body center line C, while it is disposed below the left side frame 5. Additionally, the left side frame 5 is positioned higher than the right side frame 6. Therefore, a sufficient space can be ensured for placing the fuel pipe 125 in the vicinity of the front frame 4 and left side frame 5.

Furthermore, the left side frame 5 is disposed in a higher position than the right side frame 6, and the fuel pipe 125 is placed below the left side frame 5. Therefore, the footboard 27 can be placed nearer to the left side frame 5 than a case that the fuel pipe 125 is placed above the left side frame 5, whereby the footboard 27 can be lowered.

In the present embodiment, the connection tube 88 is provided to one side (the left side in this case) of the fuel tank 60 in the transverse direction of the vehicle. Additionally, the fuel pipe 125 is disposed below the left side frame 5, and the left side frame 5 is joined to the front frame 4 in the left joining part 7. Moreover, the right side frame 6 is disposed in a lower position than the left joining part 7, and the right side frame 6 is joined to the front frame 4 in the right joining part 8. Therefore, the left side frame 5, below which the fuel pipe 125 is placed, is joined to the front frame 4 in a higher position than the right side frame 6. As a result, the longitudinal and transverse bending rigidity of the front frame 4 can be markedly improved, and the height of the footrest 28 can be set lower.

Furthermore, a protruding part 94, protruding forward of the vehicle body, is formed on one of the transverse sides of the fuel tank 60 (the left side in this case) with respect to a vehicle body center line C in a plan view of the vehicle body. The connection part 88a and the connection tube 88 are provided on the top surface of the protruding part 94. Therefore, it is possible to enhance flexibility of the layout that the connection tube 88 is connected to the fuel pipe 125 while it is disposed close to the front of the fuel tank 60. Simultaneously, the capacity of the fuel tank 60 can be increased.

The outline shape of the fuel tank 60 is matched with the left and right side frames 5, 6 of the vehicle body frame 2. This contributes to increase of the capacity of the fuel tank 60.

The attachment flange 98a of the fuel pump 98 is attached to the inclined surface 96 of the fuel tank 60, and a pump body 98b is provided to the attachment flange 98a at a further forwardly inclined angle than the inclined surface 96. The pump body 98b can be thereby greatly inclined inside the fuel tank 60. For a similar reason, the height of the fuel pump 98 in the vertical direction can be suppressed, and increase of the height dimension of the fuel tank 60 can therefore be prevented. As a result, the height of the footboard 27 can be lowered.

The front frame 4 of the vehicle body frame 2 is formed into a rectilinear shape. The front frame 4 is disposed in a further forward position in the longitudinal direction of the vehicle than a type of front frame curved rearward in a side view. Therefore, even when the fuel tank 60 does not overlap with the front frame 4 in a side view, the front end of the fuel tank 60 can be disposed in a forward position. Similarly to the above, the longitudinal dimension of the fuel tank 60 can be consequently increased so as to increase the capacity thereof, while a space of the footboard 27 in the longitudinal dimension is sufficiently ensured.

### Second Embodiment

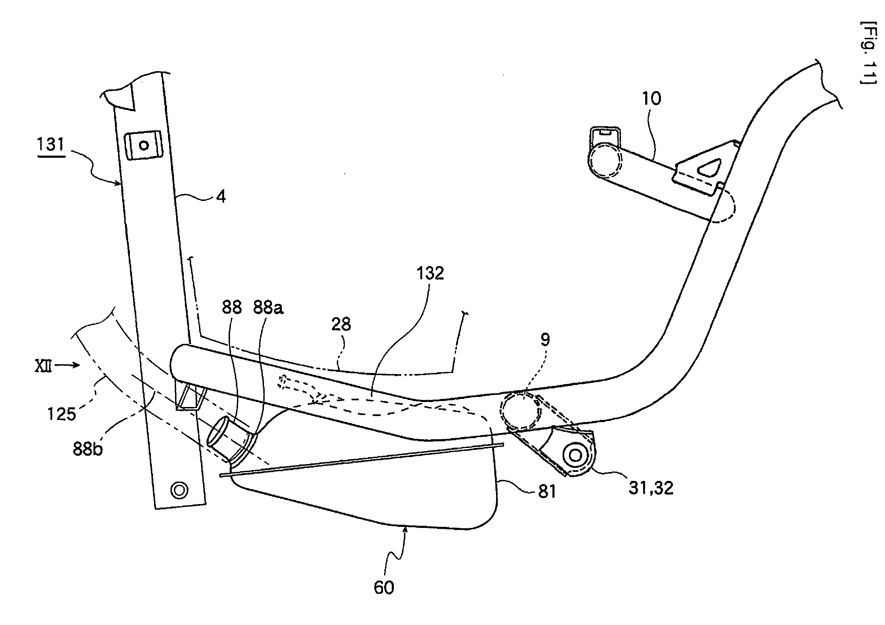

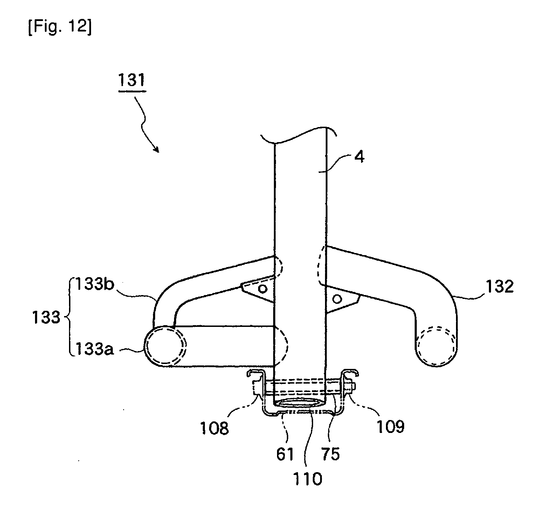

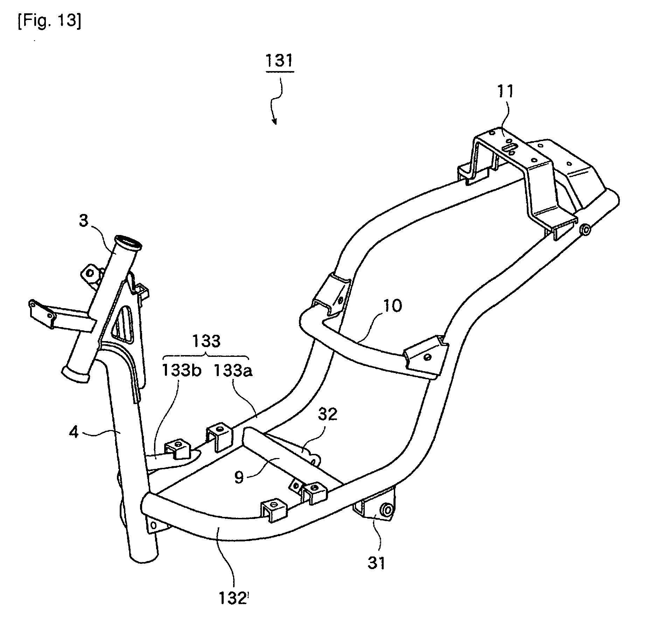

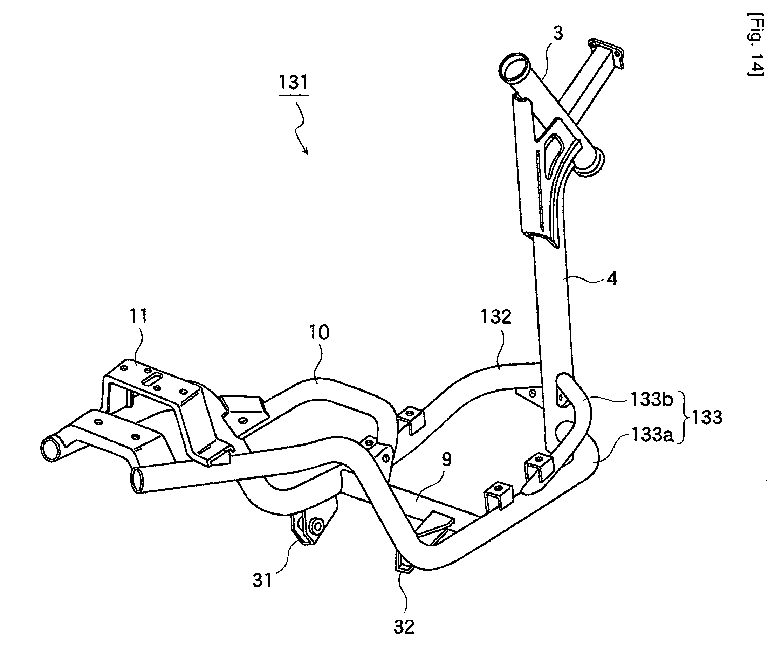

FIG. 11 is a left side view of a vehicle body frame and a fuel tank of a scooter type vehicle according to a second embodiment of the present invention. FIG. 12 is a front view of the vehicle body frame seen along an arrow XII in FIG. 11. FIG. 13 is a perspective view of the vehicle body frame seen from left front. FIG. 14 is a perspective view of the vehicle body frame seen from right rear.

Aside from the configuration of a right side frame 133, a vehicle body frame 131 is substantially the same as the vehicle body frame 2 of the first embodiment illustrated in FIGS. 2 and 3. The components of the vehicle body frame 131 are therefore denoted by the same numerical symbols as the first embodiment, and are not hereinafter described.

The right side frame 133 has a right lower side frame 133a and a right upper side frame 133b. The front end of the right lower side frame 133a is connected to a front frame 4, whereas the rear end thereof is positioned in the same position as the left side frame 132. The right lower side frame 133a extends to the rearward from the connection part with the front frame 4, and then further extends in an upwardly rearward direction. On the other hand, the front end of the right upper side frame 133b is connected to the front frame 4, whereas the rear end thereof is connected to the right lower side frame 133a below a footboard 27.

The distal end of the right lower side frame 133a is at a substantially right angle to a right side surface of the approximately bottom end of the front frame 4 in a front view of the vehicle body, and the rear half portion thereof extends in an upwardly rearward direction. The front ends of the left side frame 132 and the right upper side frame 133b are joined at an obtuse angle to the left and right side surfaces of the front frame 4, respectively, and the right upper side frame 133b is obliquely joined to the upper edge of the front part of the right lower side frame 133a.

The connection part 88a is disposed in the front top part of a fuel tank 60, while it is positioned behind the front frame 4 and also between the left side frame 132 and right side frame 133 in a side view of the vehicle body, as illustrated in FIG. 11. The connection tube 88, connected to the connection part 88a, is angled so that a center axis extension line 88b thereof passes underneath the left side frame 132.

A fuel pipe 125 herein composes a fuel supply part.

It is thereby possible to sufficiently ensure the capacity of the fuel tank 60 without raising the footboard 27.

A main body part 81 of the fuel tank 60 overlaps with the left side frame 132 and right lower and upper side frames 113a, 113b in a side view of the vehicle body. However, the main body part 81 does not overlap with the left side frame 132 and the right lower and upper side frames 133a, 133b in a plan view of the vehicle body.

The footboard 27 can thereby be prevented from being raised even if the height dimension of the main body part 81 is increased to a certain extent in order to increase the capacity of the fuel tank 60.

Furthermore, the fuel pipe 125, connected to the connection tube 88, is placed below the left side frame 132. The left side frame 132, together with the right upper side frame 113b, is connected to the front frame 4 in a higher position than the right lower side frame 133a.

Therefore, the longitudinal and transverse bending rigidity of the front frame 4 can be markedly improved. At the same time, a dead space, formed underneath the left side frame 132, can be effectively utilized by placing the fuel pipe 125 therein, and the height of the footboard 27 can consequently be lowered.

### Other Embodiments

The present invention is not limited to the first and second embodiments previously described.

FIG. 15 illustrates an example that no sub-tank is provided to the fuel supply route. In the embodiment illustrated in FIG. 15, a filler opening 120 and a connection tube 88 of the fuel tank 60 are connected through a fuel pipe 125 made of flexible material (e.g., rubber). The fuel pipe 125 passes through underneath a left side frame 5, and is connected to the connection tube 88. The left side frame 5 is jointed to a front frame 4 in a higher position than a right side frame. Therefore, the height of the entire vehicle is not increased due to the disposition of the fuel pipe 125. In the present invention, any members may be disposed between the fuel filler opening 120 and the connection tube 88 as long as the fuel filler opening 120 and the connection tube 88 are connected to each other.

In the first embodiment, the heights of the left and right side frames 5, 6 in relation to the front frame 4 may be reversed. The connection tube 88 and the connection part 88a may also be provided to either the left side or the right side of the fuel tank 60. Furthermore, the fuel tank 60 may not necessarily be formed in bilateral asymmetry. When it is formed in bilateral asymmetry, the protruding part 94 may be provided on the opposite side (the right side) from the aforementioned embodiments.

As disclosed in the aforementioned embodiments, if the connection tube 88 is provided near the left side of the fuel tank 60, a breather tube for letting out air from the fuel tank 60 is of necessity provided near the right side of the fuel tank 60. Therefore, when fuel is supplied to the fuel tank 60 while the vehicle is parked in a state that the vehicle body is inclined to the left using a side kickstand commonly provided on the left side of the vehicle body, air is easily deflated from the inside of the fuel tank 60 through the breather tube and fuel can be smoothly supplied to the fuel tank 60.

In the first and second embodiments, the connection tube is positioned behind the front frame in a side view. However, the position of the connection tube is not limited to this as long as the connection part of the connection tube is positioned behind the front frame. For example, the front end of the connection tube may be positioned forward of the front frame in a side view.

The configuration of the vehicle body cover is not limited to one described in the first and second embodiments. The vehicle body cover may be composed of any suitable members.

In the first and second embodiments, the footboard is formed in an approximately flat shape. However, the present invention is similarly applicable to a type of vehicle including a pair of right and left footboards and a protruding portion interposed between the footboards. Moreover, the present invention is also similarly applicable to another type of vehicle that a footboard partially includes a protruding part.

In the aforementioned embodiments, components of the vehicle body frame, including the head pipe, the front frame, the right side frame and the left side frame, are connected to each other by welding. However, the connection structure of the present invention is not limited to one described in the aforementioned embodiments.

### Reference Signs List

- 1: Scooter type vehicle
- 2: Vehicle body frame
- 3: Head pipe
- 4: Front frame
- 5: Left side frame
- 6: Right side frame
- 34: Power unit
- 46: Body cover
- 60: Fuel tank
- 81: Main body part
- 88: Connection tube
- 88a: Connection part
- 94: Protruding part
- 96: Inclined surface
- 98: Fuel pump
- 120: Fuel filler opening
- 125: Fuel pipe
- C: Vehicle body center line

## Claims

1. A scooter type vehicle comprising:
a vehicle body frame (2), including:
a head pipe (3) supporting a front fork (19);
a front frame (4) extending downward from the head pipe (3);
a left side frame (5) having a front part connected to the front frame (4) and extending from a bottom part of the front frame (4) in a left-rearward direction of the vehicle; and
a right side frame (6) having a front part connected to the front frame (4) and extending from the bottom part of the front frame (4) in a right-rearward direction of the vehicle;
wherein the scooter type vehicle further comprises:
a front wheel (18) supported by the front fork (19), the front wheel (18) disposed forward of the front frame (4);
a footboard (27) disposed above both the left side frame (5) and the right side frame (6);
a fuel tank (60) disposed below the footboard (27), the fuel tank (60) at least partially overlapping with the right side frame (6) or the left side frame (5) in a side view of the vehicle;
a vehicle body cover (46) including a front cover part (47,48) for covering the head pipe (3) and the front frame (4), the front cover part (47,48) provided with a fuel filler opening (120), the fuel filler opening (120) positioned higher than the footboard (27); and
a fuel supply part (121,125) for connecting the fuel filler opening (120) and the fuel tank (60),
**characterized in that**
one of the front part of the right side frame (6) and the front part of the left side frame (5) is largely inclined with respect to a center line of the vehicle perpendicular to a transverse direction of the vehicle than the other of the front parts of the right and left side frames (5, 6),
one of the front parts of the right and left side frames (5, 6) is connected to the front frame (4) in a higher position than the other of the front parts of the right and left side frames (5, 6), and
the fuel supply part (121,125) is connected to the fuel tank (60) in a further rearward position than the front frame (4) in the side view of the vehicle, the connection position of the fuel supply part (121,125) to the fuel tank (60) being lower than the position of one of the right and left side frames (5, 6) which is disposed at a higher position than the other of the right and left side frames (5, 6), the connection position of the fuel supply part (121,125) to the fuel tank (60) being between the right side frame (6) and the left side frame (5) in a plan view of the vehicle.

2. The scooter type vehicle according to claim 1, wherein the fuel supply part (121,125) is partially disposed below the left side frame (5) or the right side frame (6).

3. The scooter type vehicle according to claim 1 or 2, wherein the fuel tank (60) has a main body part (81) disposed so as not to overlap with the left side frame (5) and the right side frame (6) in a plan view of the vehicle body.

4. The scooter type vehicle according to any one of claims 1 to 3, wherein the fuel tank (60) has a main body part (81) disposed so as to overlap with at least one of the left side frame (5) and the right side frame (6) in a side view of the vehicle body.

5. The scooter type vehicle according to any one of claims 1 to 4,
wherein the fuel supply part (121,125) includes a fuel pipe (125),
the fuel tank (60) includes a main body part (81) and a connection tube (88), the connection tube (88) disposed on the top surface of the main body part (81), the connection tube (88) connected to the fuel pipe (125),
the fuel tank (60) includes a protruding part (94), the protruding part (94) positioned in one of two parts of the fuel tank (60) virtually divided by a vehicle body center line in the plan view of the vehicle body, the protruding part (94) protruding to the forward of the vehicle body in the plan view of the vehicle body, and
the connection tube (88) is provided in the protruding part (94).

6. The scooter type vehicle according to any one of claims 1 to 5,
wherein the fuel tank (60) has an inclined surface (96) having a flat part inclined with respect to a horizontal plane, and
a fuel pump (98) is attached to the inclined surface (96).

7. The scooter type vehicle according to any one of claims 1 to 6, wherein the front frame (4) has a rectilinear shape.

## Patentansprüche

1. Ein Roller-Typ-Fahrzeug, das folgende Merkmale aufweist:
einen Fahrzeugkörperrahmen (2), der folgende Merkmale umfasst:
ein Hauptrohr (3), das eine Vordergabel (19) trägt;
einen Vorderrahmen (4), der sich von dem Hauptrohr (3) nach unten erstreckt;
einen linken Seitenrahmen (5), der ein Vorderteil aufweist, das mit dem Vorderrahmen (4) verbunden ist, und sich von einem Unterteil des Vorderrahmens (4) in einer Links-Rückwärtsrichtung des Fahrzeugs erstreckt; und
einen rechten Seitenrahmen (6), der ein Vorderteil aufweist, das mit dem Vorderrahmen (4) verbunden ist, und sich von dem Unterteil des Vorderrahmens (4) in einer Rechts-Rückwärtsrichtung des Fahrzeugs erstreckt;
wobei das Roller-Typ-Fahrzeug ferner folgende Merkmale aufweist:
ein Vorderrad (18), das durch die Vordergabel (19) getragen wird, wobei das Vorderrad (18) vor dem Vorderrahmen (4) angeordnet ist;
eine Fußplatte (27), die sowohl über dem linken Seitenrahmen (5) als auch dem rechten Seitenrahmen (6) angeordnet ist;
einen Kraftstofftank (60), der unter der Fußplatte (27) angeordnet ist, wobei der Kraftstofftank (60) in einer Seitenansicht des Fahrzeugs zumindest teilweise mit dem rechten Seitenrahmen (6) oder dem linken Seitenrahmen (5) überlappt;
eine Fahrzeugkörperabdeckung (46), die ein Vorderabdeckungsteil (47, 48) zum Abdecken der Hauptleitung (3) und des Vorderrahmens (4) umfasst, wobei das Vorderabdeckungsteil (47, 48) mit einer Kraftstofffüllöffnung (120) versehen ist, wobei die Kraftstofffüllöfmung (120) höher positioniert ist als die Fußplatte (27); und
ein Kraftstoffzufuhrteil (121, 125) zum Verbinden der Krafistofffüllöffnung (120) und des Kraftstofftanks (60),
**dadurch gekennzeichnet, dass**
entweder das Vorderteil des rechten Seitenrahmens (6) oder das Vorderteil des linken Rahmens (5) größtenteils geneigt ist bezüglich einer Mittellinie des Fahrzeugs senkrecht zu einer Querrichtung des Fahrzeugs als das andere der Vorderteile des rechten und linken Seitenrahmens (5, 6),
eines der Vorderteile des rechten und linken Seitenrahmens (5, 6) mit dem Vorderrahmen (4) an einer höheren Position verbunden ist als das andere der Vorderteile des rechten und linken Seitenrahmens (5, 6), und
das Kraftstoffzufuhrteil (121, 125) in der Seitenansicht des Fahrzeugs an einer weiter hinten liegenden Position mit dem Kraftstofftank (60) verbunden ist als der Vorderrahmen (4), wobei die Verbindungsposition des Kraftstoffzufuhrteils (121, 125) zu dem Kraftstofftank (60) niedriger ist als die Position von einem der rechten und linken Seitenrahmen (5, 6), der an einer höheren Position angeordnet ist als der andere der rechten und linken Seitenrahmen (5, 6), wobei die Verbindungsposition des Kraftstoffzufuhrteils (121, 125) zu dem Kraftstofftank (60) in einer Draufsicht des Fahrzeugs zwischen dem rechten Seitenrahmen (6) und dem linken Seitenrahmen (5) liegt.

2. Das Roller-Typ-Fahrzeug gemäß Anspruch 1, bei dem das Kraftstoffzufuhrteil (121, 125) teilweise unter dem linken Seitenrahmen (5) oder dem rechten Seitenrahmen (6) angeordnet ist.

3. Das Roller-Typ-Fahrzeug gemäß Anspruch 1 oder 2, bei dem der Kraftstofftank (60) ein Hauptkörperteil (81) aufweist, das angeordnet ist, um in einer Draufsicht des Fahrzeugkörpers nicht mit dem linken Seitenrahmen (5) und dem rechten Seitenrahmen (6) zu überlappen.

4. Das Roller-Typ-Fahrzeug gemäß einem der Ansprüche 1 bis 3, bei dem der Kraftstofftank (60) ein Hauptkörperteil (81) aufweist, das angeordnet ist, um in einer Seitenansicht des Fahrzeugkörpers mit zumindest entweder dem linken Seitenrahmen (5) oder dem rechten Seitenrahmen (6) zu überlappen.

5. Das Roller-Typ-Fahrzeug gemäß einem der Ansprüche 1 bis 4,
bei dem das Kraftstoffzufuhrteil (121, 125) ein Kraftstoffrohr (125) umfasst,
der Kraftstofftank (60) ein Hauptkörperteil (81) und eine Verbindungsröhre (88) umfasst, wobei die Verbindungsröhre (88) auf der oberen Oberfläche des Hauptkörperteils (81) angeordnet ist, und die Verbindungsröhre (88) mit dem Kraftstoffrohr (125) verbunden ist,
der Kraftstofftank (60) ein vorstehendes Teil (94) umfasst, wobei das vorstehende Teil (94) in einem von zwei Teilen des Kraftstofftanks (60) angeordnet ist, der in der Draufsicht des Fahrzeugkörpers durch eine Fahrzeugkörpermittellinie virtuell geteilt ist, wobei das vorstehende Teil (94) in der Draufsicht des Fahrzeugkörpers zu der Vorderseite des Fahrzeugkörpers vorsteht, und
die Verbindungsröhre (88) in dem vorstehenden Teil (94) vorgesehen ist.

6. Das Roller-Typ-Fahrzeug gemäß einem der Ansprüche 1 bis 5,
bei dem der Kraftstofftank (60) eine geneigte Oberfläche (96) aufweist mit einem flachen Teil, das bezüglich einer horizontalen Ebene geneigt ist, und
eine Kraftstoffpumpe (98) an der geneigten Oberfläche (96) befestigt ist.

7. Das Roller-Typ-Fahrzeug gemäß einem der Ansprüche 1 bis 6, bei dem der Vorderrahmen (4) eine geradlinige Form aufweist.

## Revendications

1. Véhicule de type scooter comprenant:
un cadre de carrosserie de véhicule (2), comportant:
un tube avant (3) qui supporte une fourche avant (19),
un cadre avant (4) qui s'étend vers le bas à partir du tube avant (3);
un cadre latéral gauche (5) présentant une partie avant connectée au cadre avant (4) et s'étendant à partir d'une partie inférieure du cadre avant (4) dans une direction vers la gauche et vers l'arrière du véhicule; et
un cadre latéral droit (6) présentant une partie avant connectée au cadre avant (4) et s'étendant à partir d'une partie inférieure du cadre avant (4) dans une direction vers le droite et vers l'arrière du véhicule;
dans lequel le véhicule de type scooter comprend par ailleurs:
une roue avant (18) supportée par la fourche avant (19), la roue avant (18) étant disposée à l'avant du cadre avant (4);
un marchepied (27) disposé au-dessus tant du cadre gauche (5) que du cadre droit (6);
un réservoir à carburant (60) disposé au-dessus du marchepied (27), le réservoir à carburant (60) étant au moins partiellement en chevauchement avec le cadre latéral droit (6) ou le cadre latéral gauche (5) en vue latérale du véhicule;
un couvercle de carrosserie de véhicule (46) comportant une partie de couvercle avant (47, 48) destinée à couvrir le tube avant (3) et le cadre avant (4), la partie de couvercle avant (47, 48) étant pourvue d'une ouverture de remplissage de carburant (120), ladite ouverture de remplissage de carburant (120) étant positionnée plus haut que le marchepied (27); et
une partie d'alimentation de carburant (121, 125) destinée à connecter l'ouverture de remplissage de carburant (120) et le réservoir à carburant (60),
**caractérisé par le fait que**
l'une parmi la partie avant du cadre latéral droit (6) et la partie avant du cadre latéral gauche (5) est plus largement inclinée par rapport à une ligne centrale du véhicule perpendiculaire à une direction transversale du véhicule que l'autre parmi les parties avant des cadres latéraux droit et gauche (5, 6),
l'une parmi les parties avant des cadres latéraux droit et gauche (5, 6) est connectée au cadre avant (4) dans une position supérieure à celle de l'autre parmi les parties avant des cadres latéraux droit et gauche (5, 6), et
la partie d'alimentation de carburant (121, 125) est connectée au réservoir à carburant (60) en une position plus en arrière que le cadre avant (4) en vue latérale du véhicule, la position de connexion de la partie d'alimentation de carburant (121, 125) au réservoir à carburant (60) étant inférieure à la position de l'un parmi les cadres latéraux droit et gauche (5, 6) qui est disposé à une position supérieure à l'autre parmi les cadres latéraux droit et gauche (5, 6), la position de connexion de la partie d'alimentation de carburant (121, 125) au réservoir à carburant (60) étant située entre le cadre latéral droit (6) et le cadre latéral gauche (5) en vue en plan du véhicule.

2. Véhicule de type scooter selon la revendication 1, dans lequel la partie d'alimentation de carburant (121, 125) est disposée partiellement au-dessous du cadre latéral gauche (5) ou du cadre latéral droit (6).

3. Véhicule de type scooter selon la revendication 1 ou 2, dans lequel le réservoir à carburant (60) présente une partie de carrosserie principale (81) disposée de manière à ne pas se chevaucher avec le cadre latéral gauche (5) et le cadre latéral droit (6) en vue en plan de la carrosserie du véhicule.

4. Véhicule de type scooter selon la revendication 1 à 3, dans lequel le réservoir à carburant (60) présente une partie de carrosserie principale (81) disposée de manière à se chevaucher avec au moins l'un parmi le cadre latéral gauche et le cadre latéral droit (6) en vue latérale de la carrosserie du véhicule.

5. Véhicule de type scooter selon l'une quelconque des revendications de 1 à 4,
dans lequel la partie d'alimentation de carburant (121, 125) comprend un tube à carburant (125),
le réservoir à carburant (60) comporte une partie de carrosserie principale (81) et un tube de connexion (88), le tube de connexion (88) étant disposé sur la surface supérieure de la partie de carrosserie principale (81), le tube de connexion étant connecté au tube à carburant (125),
le réservoir à essence (60) comporte une partie en saillie (94), la partie en saillie (94) étant positionnée dans l'une de deux parties du réservoir à carburant (60) virtuellement divisé par une ligne centrale de carrosserie de véhicule en vue en plan de la carrosserie du véhicule, la partie en saillie (94) faisant saillie vers l'avant de la carrosserie du véhicule en vue en plan de la carrosserie du véhicule, et
le tube de connexion (88) est prévu dans la partie en saillie (94).

6. Véhicule de type scooter selon l'une quelconque des revendications 1 à 5,
dans lequel le réservoir à carburant (60) présente une surface inclinée (96) présentant une partie plane inclinée par rapport à un plan horizontal, et
une pompe à carburant (98) est fixée à la surface inclinée (96).

7. Véhicule de type scooter selon l'une quelconque des revendications 1 à 6, dans lequel le cadre avant (4) présente une forme rectiligne.
